# EUROPEAN PATENT APPLICATION

(11) **EP 1 798 958 A1**
(43) Date of publication of application: **20.06.2007**
(21) Application number: 05112344.6
(22) Date of filing: 16.12.2005
(51) Int. Cl.: H04N 5/225, G02B 26/02

(54) **Adjustable liquid optical diaphragm**

(71) Applicant: Varioptic, 69007 Lyon (FR)
(72) Inventor: Berge, Bruno, 69002 Lyon (FR)
(74) Representative: de Beaumont, Michel

(57) **Abstract**

The invention concerns an adjustable optical diaphragm having an optical axis, comprising first and second immiscible liquids movable with respect to one another by an electrowetting phenomenon under an applied voltage, the first liquid being substantially opaque and the second liquid being substantially transparent, the diaphragm comprising a chamber with an inner surface and containing an annular volume of the first liquid in contact with the inner surface, centered on the optical axis and contacting the second liquid at an interface, the interface having a radially inner perimeter and a radially outer perimeter, the inner and outer perimeters contacting the inner surface, wherein one of the inner and the outer perimeters is movable with respect to the inner surface by a change in said applied voltage and the other of the inner and outer perimeters is fixed or at least relatively immovable with respect to the inner surface.

## Description

### FIELD OF THE INVENTION

The present invention relates to an adjustable optical diaphragm. In particular, the present invention relates to a adjustable liquid optical diaphragm with variable aperture provided by moving fluids by electrowetting.

### BACKGROUND OF THE INVENTION

Mechanical diaphragms that provide variable apertures for optical devices are known, and comprise moving parts. For certain applications, such as for example digital cameras in mobile phones, small optical elements are required for providing a variable aperture. Mechanical diagrams are not ideal for this application as they are bulky, they have a limited life span due to the moving parts, and they are relatively expensive to produce.

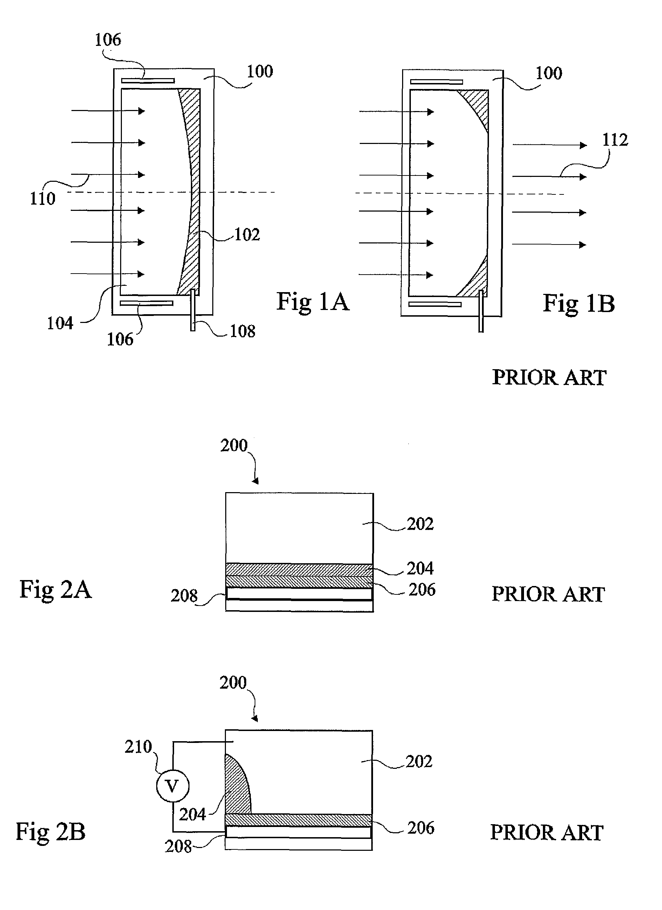

Figures 1A and 1B illustrate the principles of an optical device proposed in US patent application N°2001/0017985 which comprises fluids. A container 100 comprises an opaque first fluid 102, and a transparent second fluid 104. The opaque fluid 102 is for example water mixed with carbon particles. Transparent fluid 104 is for example oil. An annular electrode 106 is embedded in an insulating material, formed in the container 100, and an electrode 108 is arranged to provide a voltage to opaque fluid 102. As shown in figure 1A, in a first state, the opaque fluid rests across the entire device, blocking rays of light 110 from passing through the device.

As shown in figure 1B, when an oscillating current of around ± 200 volts is applied to the electrode 108, the opaque fluid 102 moves to the sides of the optical device, allowing the rays of light 112 to pass through the optical element.

The device of figures 1A and 1B has a number of drawbacks. The point on the inner surface of the device from which the separation of the water starts is not defined and may not be central, and then once the water has separated there is no way of ensuring that the aperture provided by the device is rotationally symmetric to the optical axis of the device. Furthermore, oil 104 will stick to the container 100, thereby making it difficult to reintroduce the water 102 across the device once the voltage is removed. It will be hard to control the device in such a way that the aperture opening and closing is monotonic in relation to the applied voltage.

Figures 2A and 2B show an alternative optical element proposed in International Patent Application WO 2004/027489. As shown in figure 2A, an optical shutter 200 comprises a first transparent liquid 202 and a second opaque liquid 204. Transparent liquid 202 is a conducting liquid, in this case water, and liquid 204 is a dielectric, and in this example comprises oil. A contact layer 206 is provided between the liquids and an electrode 208. Layer 206 comprises a material having a hydrophilic surface, such that in a first state the oil 204 covers the contact layer 206. As shown in figure 2B, when a voltage is applied between the water 202 and electrode 208, due to the electrowetting effect, the wettability of contact layer 206 is increased, and water 202 makes contact with this layer 206, forcing the oil 204 to move to one side.

Whilst the device 200 may operate reasonably as a shutter, the problem with this device is that it cannot be easily controlled at states between the open and shut states. This is because of the large movement of the oil 204 from the shut to the open state which is hard to control precisely.

### SUMMARY OF THE INVENTION

It is an aim of the embodiments of the present invention to provide an adjustable diaphragm which at least partially addresses the problems of the prior art discussed above.

According to a first aspect of the present invention, there is provided an adjustable optical diaphragm having an optical axis, comprising first and second immiscible liquids movable with respect to one another by an electrowetting phenomenon under an applied voltage, the first liquid being substantially opaque and the second liquid being substantially transparent, the diaphragm comprising a chamber with an inner surface and containing an annular volume of the first liquid in contact with the inner surface, centered on the optical axis and contacting the second liquid at an interface, the interface having a radially inner perimeter and a radially outer perimeter, the inner and outer perimeters contacting the inner surface, wherein one of the inner and the outer perimeters is movable with respect to the inner surface by a change in said applied voltage and the other of the inner and outer perimeters is fixed or at least relatively immovable with respect to the inner surface.

According to some embodiments of the present invention, the inner perimeter of the interface is moveable between the perimeter of the first region and the perimeter of a second region surrounding the first region, and the outer perimeter of the interface is fixed by a sharp variation in the shape or curvature of the inner surface of the chamber, for example by a right-angled annular edge. In alternative embodiments the outer perimeter of the interface is fixed by a difference in the wettability between areas of the inner surface of the chamber, for example achieved by treating the surfaces to be hydrophilic or hydrophobic.

According to some embodiments of the invention the first liquid is always in contact with a third region of the inner surface of the chamber, the third region being inclined with respect to the transparent contact surface. The inclined third region thus provides some support to the first liquid.

According to a further aspect of the present invention there is provided a method of manufacturing an adjustable optical diaphragm comprising first and second immiscible liquids movable relative to one another by electrowetting, the first liquid being substantially opaque and the second liquid being substantially transparent, the diaphragm having an optical axis, the method comprising: immersing a containment defining a chamber having an inner surface and that comprises a lid in the second liquid while the lid is removed, inserting the first liquid into the chamber, the chamber arranged such that the first liquid forms an annular volume in contact with the inner surface, centered on the optical axis and contacting the second liquid at an interface, the interface having a radially inner perimeter and a radially outer perimeter, the inner and outer perimeters contacting the inner surface, wherein one of the inner and outer perimeters is movable with respect to the inner surface and the other of the inner and outer perimeters is fixed or at least relatively immovable with respect to the inner surface, and sealing the lid on the containment such that the first and second liquids are sealed within the chamber.

According to a further aspect of the present invention, there is provided a method of diaphragming, or of operating an adjustable diaphragm, comprising providing a chamber having an optical axis and containing first and second immiscible liquids movable with respect to one another by electrowetting, the first liquid being substantially opaque and the second liquid being substantially transparent, the chamber comprising an inner surface and containing an annular volume of the first liquid in contact with the inner surface, centered on an optical axis of the chamber and contacting the second liquid at an interface, the interface having a radially inner perimeter and a radially outer perimeter, the inner and outer perimeters contacting the inner surface, fixing one of the inner and outer perimeters with respect to the inner surface, and moving the other of the inner and the outer perimeters with respect to the inner surface to provide a required diaphragming operation.

According to a further aspect of the present invention there is provided a camera, for capturing still images or moving images, comprising a lens, for example a variable focus liquid lens, a photosensor array, a memory and an adjustable diaphragm comprising first and second immiscible liquids movable with respect to one another by electrowetting, the first liquid being substantially opaque and the second liquid being substantially transparent, the diaphragm having an optical axis and comprising a chamber comprising an inner surface and containing an annular volume of the first liquid in contact with the inner surface, centered on the optical axis and contacting the second liquid at an interface, the interface having a radially inner perimeter and a radially outer perimeter, the inner and outer perimeters contacting the inner surface, wherein one of the inner and the outer perimeters is movable with respect to the inner surface and the other of the inner and outer perimeters is relatively immovable with respect to the inner surface.

Further objects, features and advantages of the present invention will become apparent from the following detailed description of exemplary preferred embodiments, when considered together with the accompanying figures of drawing.

### BRIEF DESCRIPTION OF THE DRAWINGS

In the drawings:
figures 1A and 1B are schematic cross-section views of a known optical device providing a variable diaphragm;
figures 2A and 2B are schematic views of a known optical device providing the function of a shutter;
figures 3A and 3B are schematic cross-section side views of an adjustable diaphragm according to a first embodiment of the present invention;
figure 3C is a schematic plan view of the adjustable diaphragm of figures 3A and 3B;
figure 3D is a schematic plan view of an alternative adjustable diaphragm according to another embodiment of the present invention;
figures 4A and 4B are schematic cross-section side views of an adjustable diaphragm according to a further embodiment of the present invention; and
figures 5A and 5B are schematic illustrations of an application of a device according to an embodiment of the present invention.

For reasons of clarity, same elements in the figures have been referenced with the same reference numbers throughout the figures. The figures are not drawn to scale.

### DETAILED DESCRIPTION OF THE EMBODIMENTS OF THE INVENTION

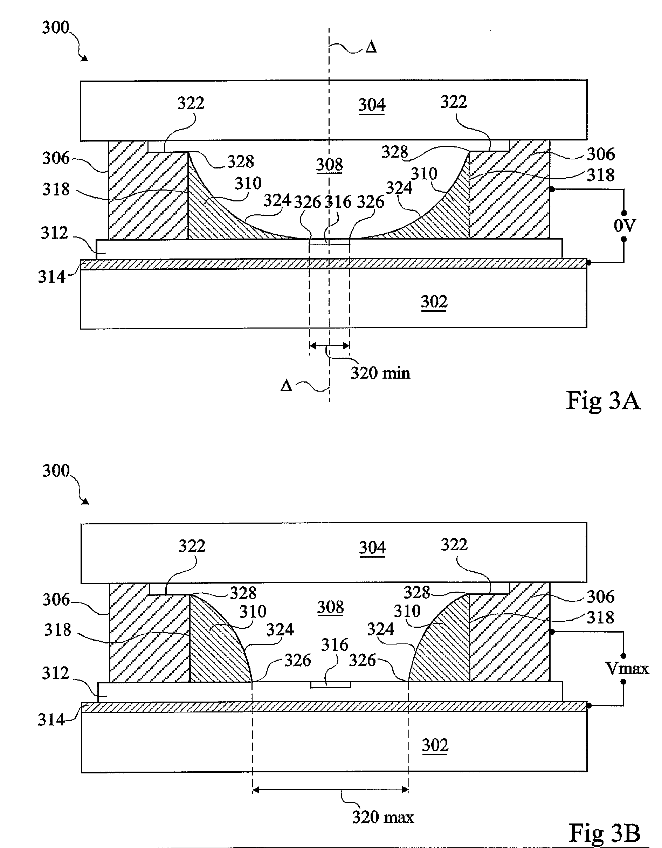

Figures 3A and 3B illustrate an adjustable diaphragm 300 that provides a variable aperture. This device comprises a transparent base 302, a transparent lid 304, and an annular electrode 306. Base 302 and lid 304 are preferably formed of glass, and annular electrode 306 is preferably formed of a metal. A first transparent liquid 308 and a second opaque liquid 310 are contained within the device. Transparent liquid 308 is a conductive liquid, preferably comprising water mixed with an electrolyte, such as a salt. Opaque liquid 310 is an insulator, and preferably comprises oil mixed with a pigment. The first and second liquids 308, 310 are immiscible. A flat transparent insulating layer 312 separates the first and second liquids 308, 310 from a flat transparent electrode 314 formed over the base 302. The first and second liquids 308, 310 are contained within a chamber defined by the inner surface of the annular electrode 306, the inner surface of lid 304, and the inner surface of transparent insulating layer 312.

The optical axis Δ of diaphragm 300 is shown in figure 3A passing through the centre of the device, perpendicularly to the transparent base 302 and lid 304, and passing through the chamber with liquids 308, 310. The optical axis Δ is taken as being the center of the aperture provided by the variable diaphragm. Due to the shape of the chamber and treatment to the walls of the chamber that will be discussed in more detail below, the opaque liquid 310 forms an annular drop which is rotationally symmetrical to the optical axis.

A circular region 316 of the surface of the transparent insulator 312 is hydrophilic, whilst the rest of the surface of insulator 312, and an inner surface 318 of the annular electrode, are hydrophobic. Region 316 is centered on the optical axis Δ of the device, and whilst for clarity it is shown in figures 3A and 3B as having a thickness, it is only a surface treatment which does not affect the optical characteristics of this region. As shown in figure 3A, in a rest state liquid 310 does not contact area 316 and rays of light passing through the device in parallel to the optical axis will be blocked by the opaque liquid 310, except in the hydrophilic region 316 where light can pass through. This region 316 thus provides the minimum aperture diameter of device 300, labelled 320ₘᵢₙ.

A voltage can be applied between electrode 314 and electrode 306. However, as shown in figure 3A, in the rest state no voltage is applied.

Figure 3B illustrates the case in which a maximum voltage Vₘₐₓ is applied between the electrode 314 and annular electrode 306. Annular electrode 306 makes contact with the water 308 in region 322, which is an annular groove, rectangular in cross section, formed in the inner surface of annular electrode at the end where it contacts with transparent lid 304. Water 308 enters this groove and contacts electrode 306, while the remainder of the inner surface 318 of annular electrode 306 is insulated from the water by contact with opaque liquid 310.

When voltage Vₘₐₓ is applied, due to the electrowetting effect, the wettability of the insulating layer 312 by water 308 is increased thereby causing the water 308 to contact more of the surface of insulator 312 and causing the water to push oil 310 to the sides of the chamber. At a maximum parting of the oil 310, the aperture of the device 300 is at its largest diameter 320ₘₐₓ, providing a largest opening through which rays of light may pass. Increasing the voltage from OV to Vₘₐₓ monotonically increases the aperture diameter from 320ₘᵢₙ to 320ₘₐₓ.

The interface between the water 308 and oil 310 defines a surface, labelled 324 in figures 3A and 3B, which at its inner perimeter 326 contacts insulating layer 312. The inner perimeter 326 provides the aperture of the device 300, and in the present embodiment will always be circular and rotational symmetric to the optical axis Δ at all diameters of the variable aperture. This is achieved in part by the circular hydrophilic region 316 which determines at which point on the insulating layer 312 the opening of the aperture will start from. It is also achieved by fixing the outer perimeter 328 of the water/oil interface 324 to an edge of the electrode 306, as shown in figures 3A and 3B. The outer perimeter 328 of interface 324 is fixed such that it is relatively immovable by means of the right-angled corner of electrode 306 between the inner surface 318 of the annular electrode and the groove 322 formed in this surface. Surface 318 has been treated such that it is hydrophobic, ensuring oil, and not water, contacts this surface. Oil will not enter groove 322 as, when fully open, the maximum contact angle between oil and surface 318 at edge 328 is not sufficiently large such that oil is forced to enter groove 322.

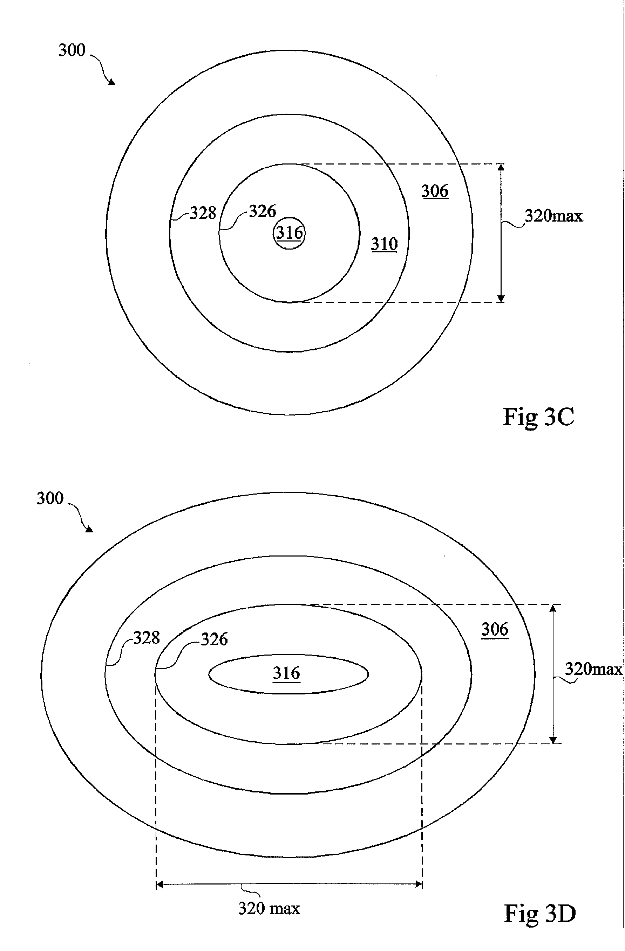

Referring to figure 3C, a plan view of the adjustable diaphragm 300 of figures 3A and 3B is shown. This figure shows the annular electrode 306 comprising the circular edge to which the outer perimeter 328 of the water/oil interface is fixed. The circular hydrophilic region 316 of the insulating layer 312 is also shown which, when no voltage is applied to the electrodes, provides the minimum diameter of the aperture of the device. Figure 3C shows the oil 310 separated to the maximum separation, providing the maximum aperture diameter 320ₘₐₓ.

In certain embodiments, the electrode 306, and/or the hydrophilic region 316 are not circular, resulting in a different shaped aperture. For example, a shape that is elliptical or has the form of an elongated circle is of use in embodiments where an aperture is required for providing light to an array of photodiodes that is not square, but for example is rectangular in shape. Figure 3D illustrates the case in which the electrode 306 is elliptical. The hydrophilic region 316 formed on the insulating layer 312 is also elliptical in shape and as the oil 310 moves out from the hydrophilic region 316, the inner perimeter 326 of the oil/water interface also forms an elliptical shape. The case of the maximum aperture is shown in figure 3D, in which the widest aperture along the longer axis of the ellipse is 320ₘₐₓ, while the widest aperture along the shorter axis of the ellipse is 320'ₘₐₓ.

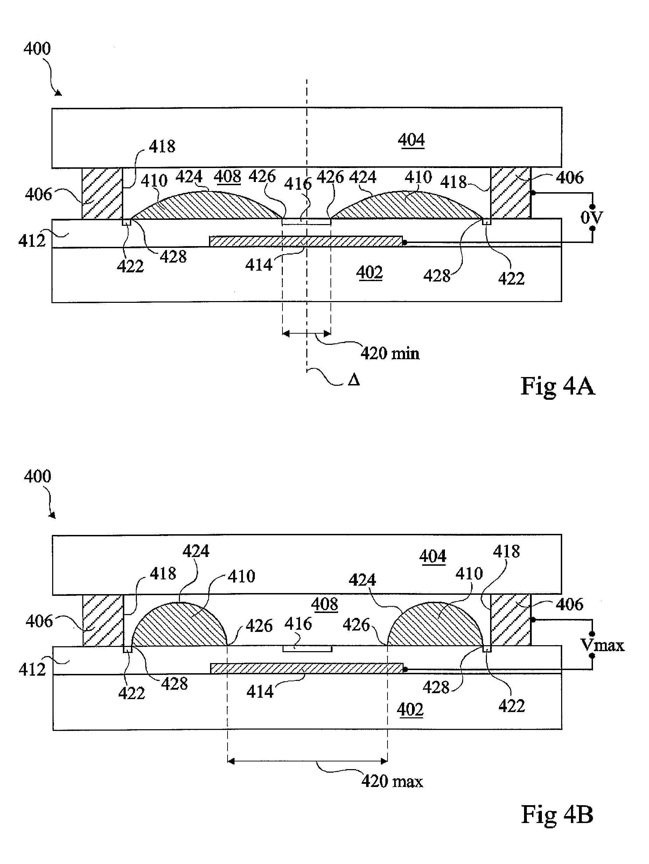

Figures 4A and 4B are cross-section side views of an alternative embodiment of an adjustable diaphragm 400. This device again comprises a transparent base 402, a transparent lid 404, and an annular electrode 406. Base 402 and lid 404 are preferably formed of glass, and annular electrode 406 is preferably formed of a metal. A first transparent liquid 408 and a second opaque liquid 410 are contained within the device. Transparent liquid 408 is again a conductive liquid, preferably comprising water mixed with an electrolyte, such as a salt. Opaque liquid 410 is an insulator, and preferably comprises oil mixed with a pigment. The first and second liquids 408, 410 are immiscible. A flat transparent insulating layer 412 separates the first and second liquids 408, 410 from a flat transparent electrode 414 formed as a flat disc centered on the optical axis Δ of the device over the base 402. Whereas the transparent electrode 314 of figures 3A and 3B extends across the whole device covering the same area as the insulating layer 312, transparent electrode 414 extends only a short distance beyond the largest possible aperture of the device, as will be explained in more detail below.

The first and second liquids 408, 410 are contained within a chamber defined by the inner surface of the annular electrode 406, the inner surface of lid 404, and the inner surface of insulating layer 412.

Rather than contacting a surface 318 of electrode 306 as shown in figures 3A and 3B, the opaque liquid 410 of figures 4A and 4B only contacts insulating layer 412, and thereby forms the shape of the top slice of a doughnut, sliced orthogonally to its axis. Again, a hydrophilic region 416 is formed on the surface of insulating layer 412, region 416 being circular and centered on the optical axis Δ. A further annular hydrophilic region 422 is formed on the surface of the insulating layer 412, close to the perimeter of the chamber containing the liquids. In a rest state, the opaque liquid 410 covers the insulating layer 412 except in regions 416 and 422. This is shown in figure 4A. Hydrophilic region 416 allows light to pass and provides the minimum diameter 420ₘᵢₙ of device 400. Hydrophilic region 422 is preferably treated such that it blocks light to avoid light passing around the edge of the opaque liquid 410.

As shown in figure 4B, when a voltage is applied between annular electrode 406 and transparent electrode 414, due to electrowetting, liquid 408 is attracted to the surface of the insulating layer 412, forcing oil 410 away from the centre of the device, and thus enlarging the aperture of the device. Figure 4B illustrates the case when the aperture diameter has attained its maximum value 420ₘₐₓ.

The water/oil interface in device 400, labelled 424, meets the insulating layer 412 at an inner perimeter 426 of the interface, and this perimeter 426 defines the aperture of the device. However the outer perimeter 428 of the oil/water interface 424 is fixed to the insulating layer 412 rather than to an edge of the annular electrode. Whereas the water/oil interface in device 300 is fixed by a mechanical arrangement of the electrode 306, in device 400, the outer perimeter 428 is fixed by treatment of the surface of the transparent insulating layer 412 in region 422. The surface of the insulating layer 412 is hydrophobic in the region between hydrophilic region 416 and hydrophilic region 422, resulting in oil and not water contacting this surface in the rest state as shown in figure 4A. Regions 416, and 422 of the insulating layer 412 and the inner surface 418 of annular electrode 416 are hydrophilic, such that water is attracted to these surfaces, and oil 410 does not contact these surfaces. In this way the outer perimeter 428 of the water/oil interface will not move during normal operation of the device. It is necessary for transparent electrode 414 not to extend to the vicinity of the outer perimeter 428 of the oil/water interface to avoid this perimeter moving due to electrowetting when a voltage is applied between the electrodes.

When devices 300 and 400 are installed in a camera they provide a variable aperture of, for example, between f/2 and f/16, wherein f is the focal length of the camera lens arrangement. Assuming that the camera has a focal length of 5mm, this means that the minimum aperture diameter 320ₘᵢₙ is approximately 0.5mm, and the maximum aperture diameter 320ₘₐₓ is approximately 2.5mm. The thickness of devices 300 and 400 is in the range of 1mm to 2mm.

Electrodes 314 and 414 are formed of a transparent conducting material, such as Indium Tin Oxide (ITO).

Hydrophilic regions 316, 416 and 422 are formed by treating these regions, for example by chemical attack. As other regions of the insulating layer 312 and 412 are preferably hydrophobic, this layer is preferably formed by depositing a transparent coating of the brand Teflon (from Dupont de Nemours) onto a layer of a hydrophilic dielectric material such as silicon oxide (SiO₂), and then chemically modifying the Teflon in the required region to form regions 316, 416 and 422. Alternatively, a material with a hydrophobic surface can be chosen for insulating layers 312 and 412, and regions 316, 416 and 422 can be treated to be hydrophilic, for example by treating the surface with silane. The resulting surface of the insulating layer in both of the above examples will provide minimal alteration to the optical characteristics of the device.

The device is preferably manufactured by forming the transparent base 302, 402, transparent electrode 314, 414, and the transparent insulating layer 312, 412 and fixing or sealing this to the annular electrode 306, 406 for example using an adhesive or a glue. Liquids 308, 408 and 310, 410 can then be inserted into position in the chamber by, for example, immersing the device in transparent liquid 308, 408, and then inserting, using a syringe, the opaque liquid 310, 410 into its approximate position where it will move naturally to the position shown in figure 3A or 4A. The lid 304, 404 can then be sealed onto the device. It is important that the quantity of liquid 310, 410 is carefully controlled. It should fully cover the insulating layer, except in regions 316, 416 and 422 with the required thickness to block light.

In the embodiment of figures 3A and 3B, the inner surface 318 of annular electrode 306 is treated to be hydrophobic, for example with a Teflon coating. This inner surface 318 is perpendicular to the insulating layer 312 and provides support to liquid 310, such that any undesired movement of liquid 310 within the chamber, if for example the lens is knocked or dropped, is less likely. Whilst this surface has been shown to be perpendicular to the insulating layer 312, in alternative embodiments it could be at a different inclination, for example at 45 degrees. However, provided this surface is inclined with respect to the insulating layer 312, i.e. not parallel to it, it will provide some support to the opaque liquid 310.

As the aperture of devices 300 and 400 opens, the contact angles between the oil 310, 410 and the insulating layer 312, 412 will increase. The contact angle at perimeters 326 and 426 preferably starts at 30 degrees and increases as the oil separates. In order to avoid hysteresis as the contact angle changes, the contact angle between the oil 310, 410 and the insulating layer 312, 412 is preferably higher than the natural contact angle between the oil and this surface. The natural contact angle of an insulating liquid deposited on a substrate and surrounded by a conductive liquid is defined in this case as the angle formed between the tangent to the substrate and the tangent to the surface of the insulating liquid, both measured at the point of the triple interface between the liquids and the substrate, when no voltage is applied, and no external perturbation exists on the substrate, such as a break or a sharp change in the curvature of the substrate. The voltage applied between the electrodes 314, 414 and 306, 406 is preferably oscillating, as this will prevent a build up of charge at the insulating layer. To fully open the aperture, a voltage of up to 60V is required.

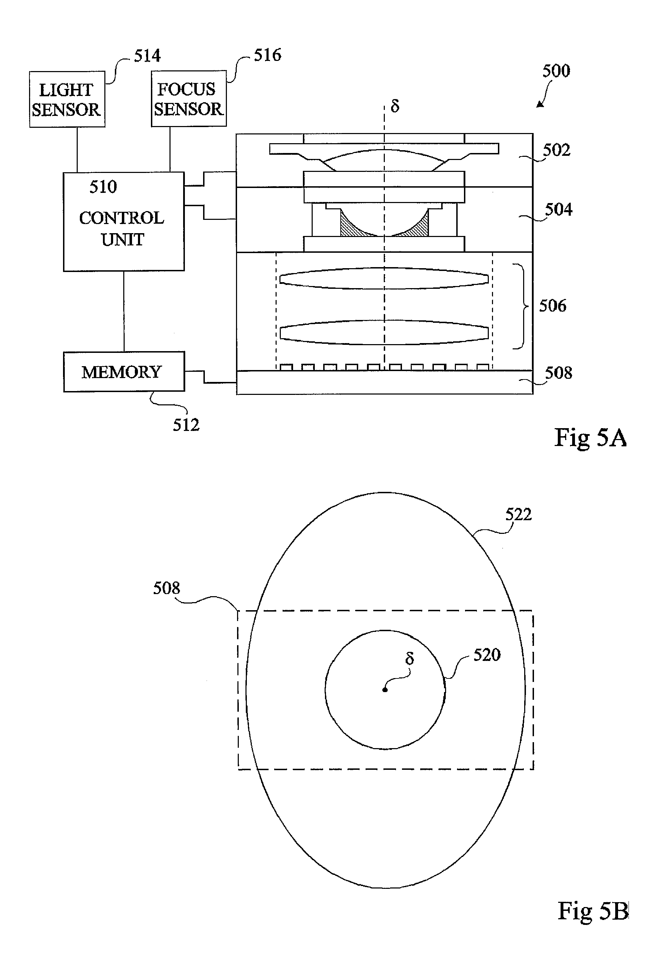

Figure 5A shows one embodiment of an application of an adjustable diaphragm. A lens unit 500 for a camera comprises a variable liquid lens 502, an adjustable diaphragm 504, a number of fixed lenses 506, and a photosensor array 508. These elements are arranged in series and are centered on an optical axis δ. This optical axis δ is the optical axis of the group of optical elements, and is lined up with the optical axis Δ of the adjustable diaphragm. The thickness of this group of elements is approximately 7mm, making it suitable for small cameras such as those of mobile phones. A control unit 510 provides control voltages to the variable lens 502 and the adjustable diaphragm 504. A memory 512 is connected to the photosensor array 508 for receiving images captured by the array. A light sensor 514 and a focus sensor 516 are connected to control unit 510. The light sensing and focusing functions of these blocks can however be provided directly by the image sensor of the camera, that is by photosensor array 508, in which case these blocks are not required.

In operation, the light sensor 514 senses an amount of light in the environment within which a photo is to be taken, and provides a signal based on the amount of light to control unit 510. Focusing information is also provided to control unit 510 from focus sensor 516, and based on the signals from light sensor 514 and focus sensor 516, control unit 510 generates control signals to drive the variable focus lens 502 and the adjustable diaphragm 504. Devices 502 and 504 will quickly respond to the control signals provided to them, and control unit 510 will control memory 512 to store the values captured by photosensor array 508. If the photosensor array 508 is used to provide lighting and focusing information, the output from the photosensor array is processed by block 510 and used to generate the control signals to the variable focus lens 502 and the adjustable diaphragm 504.

Figure 5B shows a plan view of the photosensor array 508 in the case that a rectangular array is provided, and the adjustable diaphragm is circular at its smallest diameter, but elliptical at its largest diameter. The light from the adjustable diaphragm 504 is centered around the optical axis δ of the lens arrangement, which is at the centre of the rectangular photosensor array 508. The central hydrophilic region of the adjustable diaphragm is circular, resulting in the smallest aperture diameter being circular, and at this setting light passing through the diaphragm forms a circular area labelled 520, which is within all edges of the rectangular array 508. The annular electrode of the adjustable diaphragm is elliptical, and thus when at the largest aperture diameter, the light forms an elliptical shape 522 covering the majority of the rectangular array 508. In the example of figure 5B, the ellipse of light 522 has its longest diameter at right angles to the longest edges of the rectangular array 508. This is advantageous as the lesser-curved edges of the ellipse will cause less light distortion, and light passing close to the very curved edges of the ellipse does not fall onto the photosensor array.

Thus according to embodiments described herein an optical liquid device having a variable diaphragm is provided. A first insulating opaque liquid and a second transparent conductive liquid are moved by altering the wettability of a contact surface by the transparent liquid, causing the transparent liquid to contact more or less of the contact surface. This movement of the transparent liquid in turn displaces the opaque liquid. The outer perimeter of the interface between an opaque liquid and a transparent liquid is fixed. The inner perimeter of the interface provides the variable aperture. As this aperture dilates or contracts, because the outer perimeter of the interface is fixed, only the curvature of the interface, and the contact angles at the edges of the interface, vary. Thus the aperture can be varied with minimal hysteresis, and in a monotonic fashion.

Furthermore, in the circular embodiment of figures 3 and 4, as the outer perimeter of the interface is fixed, either to a circular edge of the annular electrode, or to a circular boundary between hydrophilic and hydrophobic regions, this ensures that the inner perimeter 326 of the interface is also circular. The same is true for the elliptical embodiment of figure 3D, wherein maintaining the elliptical shape of the aperture is ensured by fixing the outer perimeter of the water/oil interface to an elliptical edge of the elliptical electrode, such that the inner perimeter 326 of this interface follows this same shape.

By providing a starting point for the separation of the oil, the hydrophilic regions 316 and 416 not only ensure that the minimum diameter of the device is centered on the optical axis, but also bring the water closer to the transparent electrode 314, 414 at this point, making it easier for the oil to part. If oil were allowed to cover the whole of the surface of insulating layer 312, 412, the water would start at a relatively large separation from the transparent electrode 314, 414 and thus it would take a larger voltage to bring the water into contact with the insulating layer.

It will be apparent to those skilled in the art that many variations to the embodiments described herein are possible.

In alternative embodiments other shapes other than circular and elliptical would be possible for the annular electrode and thus the aperture of devices 300 or 400. For example, the annular electrode could be square in shape. It is possible that the annular electrode 306, 406 and the hydrophilic region 316, 416 are of different shapes, for example the former being square, and the latter being circular, such that the shape changes as the aperture opens.

Furthermore, opaque liquid 310, 410 forms the shape of an annular drop which is not intended to be limited to a circular ring shape, but could include a volume of opaque liquid 310 in any shape having a hole through it making it annular, the hole being centered around the optical axis of the diaphragm.

Whilst in the embodiment of figures 3A and 3B described above the outer perimeter of the oil/water interface is fixed to the inner surface 318 of annular electrode 306 by the right-angled edge of the electrode, it will be apparent to those skilled in the art that in alternative embodiments no groove 322 could be provided and the edge could be fixed by treating the surface 318 such that a first area of the surface up to a certain level is hydrophobic, and a second area above this level is hydrophilic. In the embodiment of figures 4A and 4B, the outer perimeter of the oil/water interface could be fixed by providing a circular groove in the insulating layer 412.

Furthermore, whilst in the embodiment of figure 4 the inner perimeter of the oil/water interface 424 is movable providing an adjustable diaphragm having an aperture that is adjustable, in alternative embodiments the outer perimeter of the oil/water interface 424 could be adjustable, and the inner perimeter could be fixed. Such a device would be of use in certain situations in which it is necessary to block light at a central point, such as when star gazing. This could be achieved by fixing the inner perimeter of the oil/water interface by providing an annular groove in the surface of transparent surface 412, and moving transparent electrode 414 such that it is positioned close to region 422 where the liquid will move, but not close to region 416 where the interface is fixed. Region 416 can be covered in an opaque coating such that no light enters this region.

Whilst the examples of oil and water have been used in the above embodiments for the opaque and transparent liquids, it will be apparent to those skilled in the art that other liquids can be used and different surface treatments of the inner surface of the device are possible to achieve the operation of the device described in the embodiments above.

Whilst the apertures of devices 300 and 400 can operate in the range of 0.5mm to 2.5mm, it will be apparent to those skilled in the art that in alternative embodiments apertures of less than 0.5mm or greater than 2.5mm can be provided, depending on the requirements for the device. The thickness of the device can also be varied depending on the required use. The thickness of the opaque liquid can be varied to ensure that all light is blocked in regions covered by the opaque liquid, for all expected light levels. In some embodiments however some light can be allowed to pass through the opaque liquid where the liquid is thinnest, such that there is a soft transition between the aperture opening and the opaque liquid.

Having thus described at least one illustrative embodiment of the invention, various alterations, modifications and improvements will readily occur to those skilled in the art. Such alterations, modifications and improvements are intended to be within the scope of the invention. Accordingly, the foregoing description is by way of example only and is not intended to be limiting. The invention is limited only as defined in the following claims and the equivalent thereto.

## Claims

1. An adjustable optical diaphragm having an optical axis (Δ), comprising first and second immiscible liquids (310, 410, 308, 408) movable with respect to one another by an electrowetting phenomenon under an applied voltage, the first liquid (310, 410) being substantially opaque and the second liquid (308, 408) being substantially transparent, the diaphragm comprising a chamber with an inner surface and containing an annular volume of said first liquid (310, 410) in contact with said inner surface, centered on said optical axis (Δ) and contacting said second liquid at an interface (324, 424), said interface having a radially inner perimeter (326, 426) and a radially outer perimeter (328, 428), said inner and outer perimeters contacting said inner surface, wherein one of said inner and said outer perimeters is movable with respect to said inner surface by a change in said applied voltage and the other of said inner and outer perimeters is relatively immovable with respect to said inner surface.

2. The adjustable optical diaphragm of claim 1 wherein said inner surface of said chamber comprises a transparent contact surface (312) essentially perpendicular to said optical axis (Δ) of said device, said inner perimeter (326, 426) of said interface (324, 424) contacting said transparent contact surface, said transparent contact surface comprising a first region (316, 416) essentially centered around said optical axis (Δ) and arranged such that it is in constant contact with said second liquid (308, 408).

3. The adjustable optical diaphragm of claim 2 wherein said inner perimeter (326, 426) of said interface (324, 424) is moveable between the perimeter of said first region (316, 416) and the perimeter of a second region surrounding said first region.

4. The adjustable optical diaphragm of claim 1 wherein said outer perimeter (328, 428) of said interface (324, 424) is relatively immovable and said inner perimeter (326, 426) is movable, said outer perimeter being fixed by a sharp variation in the shape of said inner surface of said chamber.

5. The adjustable optical diaphragm of claim 1 wherein said outer perimeter (328, 428) of said interface (324, 424) is relatively immovable and said inner perimeter (326, 426) is movable, said outer perimeter being fixed by a difference in the wettability between areas of said inner surface of said chamber.

6. The adjustable optical diaphragm of claim 2 wherein said first liquid (310) is always in contact with a third region (318) of said inner surface of said chamber, said third region (318) being inclined with respect to said transparent contact surface (312).

7. The adjustable optical diaphragm of claim 1 further comprising a first electrode (306, 406) in electrical contact with said second liquid (308, 408), and a second transparent electrode (314, 414) formed at least over an area adjacent to and parallel to said moveable perimeter, wherein said voltage is applied between said first and second electrodes such that said change in said applied voltage moves one of said inner and outer perimeters of said interface (324, 424).

8. The adjustable optical diaphragm of claim 3 wherein said outer perimeter (328, 428) of said interface (324, 424) is circular, said inner perimeter (326, 426) of said interface is circular, and said first region (316, 416) is circular.

9. The adjustable optical diaphragm of claim 1 wherein said first liquid (310, 410) comprises an insulating liquid and said second liquid (308, 408) comprises a conductive liquid.

10. The adjustable optical diaphragm of claim 3 wherein said first region (316, 416) is hydrophilic and said second region is hydrophobic.

11. The adjustable optical diaphragm of claim 3 wherein the contact angle between said first liquid (310, 410) and said transparent contact surface remains greater than the natural contact angle between said first liquid and said transparent contact surface.

12. A method of manufacturing an adjustable optical diaphragm comprising first and second immiscible liquids (310, 410, 308, 408) movable relative to one another by electrowetting, the first liquid (310, 410) being substantially opaque and the second liquid (308, 408) being substantially transparent, the diaphragm having an optical axis (Δ), the method comprising:
immersing a containment defining a chamber having an inner surface and that comprises a lid in said second liquid while the lid is removed;
inserting said first liquid into the chamber, the chamber arranged such that said first liquid forms an annular volume in contact with said inner surface and centered on the optical axis (Δ), said first liquid contacting said second liquid at an interface (324, 424), the interface having a radially inner perimeter (326, 426) and a radially outer perimeter (328, 428) that are in contact with said inner surface, wherein one of said inner and outer perimeters is movable with respect to said inner surface and the other of said inner and outer perimeters is relatively immovable with respect to said inner surface; and
sealing the lid on the containment such that said first and second liquids are sealed within the chamber.

13. A method of diaphragming, comprising:
providing a chamber having an optical axis (Δ) and containing first and second immiscible liquids (310, 410, 308, 408) movable with respect to one another by electrowetting, the first liquid (310, 410) being substantially opaque and the second liquid (308, 408) being substantially transparent, said chamber comprising an inner surface and containing an annular volume of said first liquid (310, 410) in contact with said inner surface, centered on an optical axis (Δ) of said chamber and contacting said second liquid at an interface (324, 424), said interface having a radially inner perimeter (326, 426) and a radially outer perimeter (328, 428), said inner and outer perimeters contacting said inner surface;
fixing one of said inner and outer perimeters with respect to said inner surface; and
moving the other of said inner and said outer perimeters with respect to said inner surface to provide a required diaphragming operation.

14. A camera comprising:
a lens (502, 506);
a photosensor array (508);
a memory (512); and
an adjustable diaphragm comprising first and second immiscible liquids movable relative to one another by electrowetting, the first liquid (310, 410) being substantially opaque and the second liquid being substantially transparent, the diaphragm having an optical axis (Δ) and comprising a chamber comprising an inner surface and containing an annular volume of said first liquid in contact with said inner surface, centered on said optical axis (Δ) and contacting said second liquid at an interface (324, 424) that has a radially inner perimeter (326, 426) and a radially outer perimeter (328, 428), said inner and outer perimeters contacting said inner surface, wherein one of said inner and said outer perimeters is movable with respect to said inner surface and the other of said inner and outer perimeters is relatively immovable with respect to said inner surface.

15. The camera of claim 14 wherein said lens is a liquid variable lens (502).
